# EUROPEAN PATENT SPECIFICATION

(11) **EP 1 652 768 B1**
(45) Date of publication and mention of the grant of the patent: **11.01.2012**
(21) Application number: 05022971.5
(22) Date of filing: 21.10.2005
(51) Int. Cl.: B62M 25/04, B62K 23/06

(54) **Bicycle shifter**
Gangschalter
Dispositif de changement de vitesses

(30) Priority: 26.10.2004 DE 102004051883
(43) Date of publication of application: 03.05.2006
(73) Proprietor: SRAM Deutschland GmbH, 97404 Schweinfurt (DE)
(72) Inventor: Wessel, Robert, Dipl.-Ing., 93059 Regensburg (DE); Weiss, Martin, Dipl.-Ing., 97424 Schweinfurt (DE); Böhm, Robert; Dipl.-Ing., 97453 Mainberg (DE); McLaughlin, Scott, 97424 Schweinfurt (DE); Riehl, Markus, 97424 Schweinfurt (DE)
(74) Representative: Prechtel, Jörg

(56) References cited:
- EP-A- 0 371 429
- EP-A- 0 552 775
- DE-A1- 10 002 741
- DE-A1- 10 224 196
- FR-A- 2 701 917
- US-A- 5 203 213

## Description

### Background of the Invention

The present invention relates to bicycle shifters and more particularly to a shifting mechanism for a bicycle shifter that is configured to improve the shifting speed of a cable pull operation.

An indexed shifter generally includes takeup and release mechanisms for pulling and releasing a control cable connected to a gear change device such as a derailleur. The shifter may be actuated with one or more levers or rotating grips that return to an initial position after a cable pull or cable release operation. Such shifters are shown in German Patent Application No. 102 13 450 A1 and German Patent Application No. 102 24 196 A.

German Patent Application No. 102 13 450 discloses a release mechanism for a shifter requiring very few parts. The release mechanism includes a release lever that rests against a retaining pawl in its initial position. The retaining pawl engages a plurality of retaining teeth to maintain a cable spool in a current position. The release lever disengages the retaining pawl from the retaining teeth during a cable release operation. This configuration provides an immediate conversion of the shifting motion of the release lever into a release motion of the cable spool. Similarly, a direct arrangement of the takeup pawl with the takeup teeth may also accelerate the cable pull operation if the movement of the takeup lever is converted immediately into a rotational movement of the cable spool.

German Patent Application No. 102 24 196 discloses a shifter for pulling and releasing a control cable connected to a gear change device. The shifter includes two levers, one for rotating a cable spool about a central axis in a cable pull direction and one for rotating the cable spool about the central axis in a cable release direction. The cable spool is preloaded in the cable release direction by a return spring acting on the control cable and is non-rotatably connected to a disk element having three tooth segments. The cable spool is rotated to or held at a desired position by takeup, retaining and catch pawls engaging or disengaging with the takeup, retaining and catch tooth segments of the disk element, respectively. A sliding member is arranged about the disk element and includes the retaining pawl at one end and the catch pawl at another end. At rest, the retaining pawl is engaged with the retaining teeth. During a release operation, the retaining and catch pawls alternately engage the retaining and catch tooth segments, respectively. The retaining and catch tooth segments are arranged opposite one another on a periphery of the disk element.

The takeup tooth segment is located inward from the periphery of the disk element and has teeth with a saw-toothed shape. The takeup pawl is biased away from the takeup teeth by a takeup pawl spring and is mounted on the cable pull lever. The takeup pawl pivots about a pawl axis that extends parallel to the axis of the cable spool. Because the cable pull lever is arranged below a supporting plate and the plurality of takeup teeth is arranged above the plate, the takeup pawl has to reach through the supporting plate to engage the takeup teeth during the cable-pull operation.

The cable pull operation is initiated by rotating the cable pull lever about the central axis. Depending on the pivot angle of the cable pull lever, the gear change device may be shifted one or more gears. After the cable pull operation, the cable pull lever and the takeup pawl are returned to their initial position by a return spring and the cable spool is maintained in the current position by the retaining pawl engaging the plurality of retaining teeth.

The cable release operation is initiated by rotating the cable release lever about an axis, resulting in the lever pushing against the sliding member and the retaining pawl moves away from the retaining teeth causing the cable spool to rotate in the cable release direction until the catch pawl engages a next catch tooth. Once the release lever is released, the lever is returned to its initial position by a return spring, resulting in the sliding member being displaced such that the catch pawl moves away from the catch teeth and the cable spool rotates further in the release direction until the retaining pawl engages a next retaining tooth.

A bicycle shifter in accordance with the preamble part of claim 1 is disclosed in the European patent application EP-A-0 371 429. Here the takeup pawl is provided with several teeth which are contacting correspondingly shaped takeup teeth in the initial position of the takeup lever and the release lever under bias of a pawl spring. When actuating the release lever, the teeth of the takeup pawl are brought out of engagement with the takeup teeth by a part of the release lever with the teeth of the takeup pawl sliding along the front sides of the corresponding takeup teeth.

The object of the invention is to provide an improved shifting mechanism for a bicycle shifter with simplified construction.

This object is solved by the features of claim 1.

The present invention provides a bicycle shifter that converts a shifting motion of a takeup actuation element immediately into a cable pull movement of a cable spool that pulls a control cable connected to a gear change device. The shifter generally includes a shifter housing, a cable spool, a takeup mechanism having a takeup actuation element and a takeup pawl engageable with a plurality of takeup teeth and a release mechanism having a release actuation element and retaining and catch pawls engageable with retaining and catch teeth, respectively. The shifter housing is mountable to a handlebar of the bicycle. The cable spool rotates about an axis and is biased in the cable release direction by tension in the control cable. The takeup, retaining and catch teeth are arranged on a disk element that is nonrotatably connected to the cable spool. Preferably, the takeup teeth are arranged inside of the periphery of the disk element and the retaining and catch teeth are arranged along the periphery, preferably opposite one another.

To ensure a rapid cable pull operation, the takeup pawl, in its initial position, is located in close proximity to the takeup teeth or may contact the takeup teeth but with no . Preferably, the takeup pawl is mounted on the takeup lever which is rotatable about the cable spool axis and, in its initial position, is biased against a stop element by a return spring. Preferably, the takeup pawl rotates about a takeup pawl axis that extends parallel to the cable spool axis. A takeup pawl spring biases the takeup pawl toward the takeup teeth. Since the takeup pawl is mounted on the cable pull lever, the position of the takeup pawl relative to the takeup teeth is determined by the position of the takeup lever. In one embodiment, the initial position of the takeup lever is configured such that the takeup pawl contacts or rests against the takeup teeth with no load.

The release actuation element is a lever rotatable about an axis, preferably, different than the cable spool axis. The release mechanism further includes a sliding member arranged about the disk element and includes the retaining pawl at one end and the catch pawl at another end. During a cable release operation, the retaining and catch pawls alternately engage the retaining and release teeth, respectively. However, when the shifter is idle, the retaining pawl is engaged with the retaining teeth to maintain the cable spool in a current position. Upon initiation of a cable release operation, the takeup pawl must first be displaced away from the takeup teeth because otherwise the takeup pawl would prevent the cable spool from rotating in the cable release direction. The takeup pawl may be displaced away from the takeup teeth by the release lever or by a connecting member, preferably a spring disposed between the takeup pawl and the sliding member. To achieve a timely displacement of the takeup pawl, the connecting member displaces the takeup pawl by applying a stronger force than the takeup pawl spring biasing the takeup pawl toward the takeup teeth. After the connecting member displaces the takeup pawl away from the takeup teeth, the retaining pawl is disengaged from the retaining teeth, resulting in the cable spool rotating in the cable release direction. The arrangement of the connecting member between the takeup pawl and the release lever or the sliding member ensures efficient shifting operations even in the case of low production tolerances.

In one embodiment of the present invention, the connecting member is a resilient member such as a spring, with one end being supported on the housing or a supporting plate and the other end being connected to the release lever or to the sliding member. Upon actuation, the release lever displaces the sliding member against the initial spring force of the spring, resulting in the spring pivoting around its end supported on the housing and displacing the takeup pawl, with a bend of the spring, out of its engagement position even before the retaining pawl releases the disk element. The preloaded spring serves not only to displace the takeup pawl away from the takeup teeth but may also helps return the sliding member or the release lever to their initial position.

Theses and other features and advantages of the present invention will be more fully understood from the following description of one embodiment of the invention, taken together with the accompanying drawings.

### Brief Description of the Drawings

In the drawings:
FIG. 1 is a top view of a shifting mechanism disposed in a bicycle shifter in an initial position in accordance with one embodiment of the present invention;
FIG. 2 is a top view of the shifting mechanism of FIG. 1 during a takeup operation;
FIG. 3 is a top view of the shifting mechanism of FIG. 1 during a cable release operation; and
FIG. 4 is an exploded view of the bicycle shifter of FIG. 1.

### Detailed Description

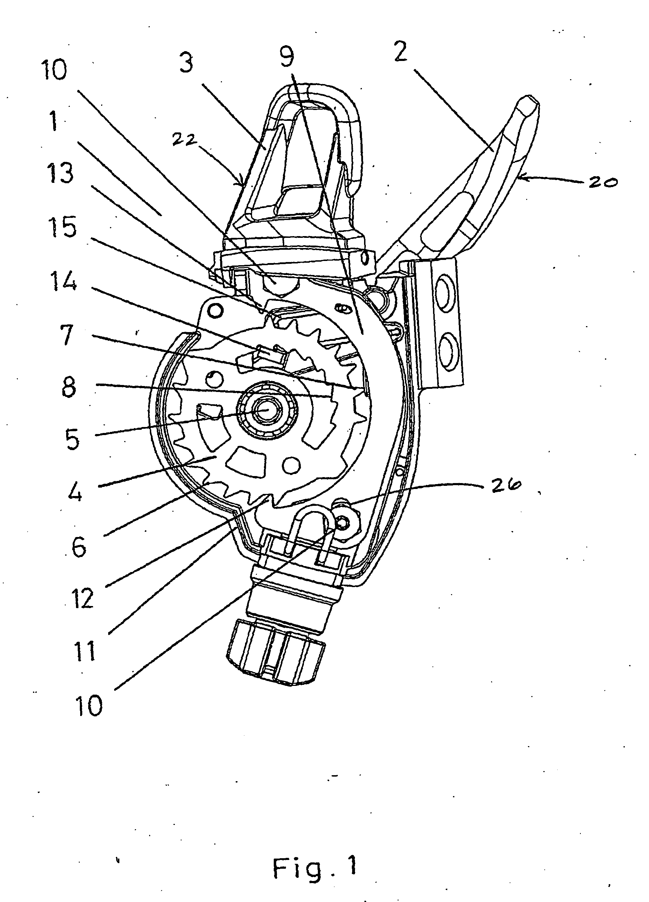

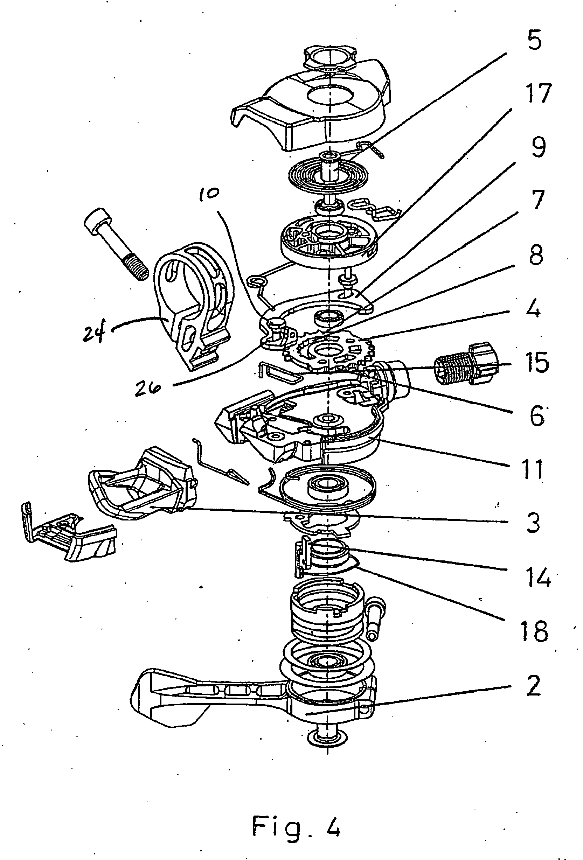

FIGS. 1-4 illustrate a bicycle shifter 1 in accordance with one embodiment of the present invention. The shifter 1 generally includes a shifter housing 11, a cable spool 17, takeup and release mechanisms 20, 22, and a clamp 24 for mounting the shifter 1 to a handlebar of the bicycle. The cable spool 17 is rotatable about a central axis 5 and has a cable groove for receiving a control cable. The cable groove may have an insertion opening for securing an end of the control cable. The other end of the control cable is connected to a gear change device (not shown). The gear change device may be a rear derailleur, a front derailleur, an internal gear hub or other similar type of mechanism. The takeup mechanism 20 rotates the cable spool 17 in a cable-pull direction to shift gears in a first direction and the release mechanism 22 rotates the cable spool 17 in a cable-release direction to shift gears in a second direction.

The takeup mechanism 20 generally includes a takeup actuation element 2 and a takeup pawl 14 engageable with a plurality of takeup teeth 8. In one embodiment of the present invention, the takeup actuation element 2 is a lever rotatable about the cable spool axis 5. In an initial position, the takeup lever 2 is biased against a stop element by a return spring. Preferably, the takeup pawl 14 is disposed on the lever 2 and rotates about a takeup pawl axis that is parallel to the cable spool axis 5. A takeup pawl spring 18 biases the takeup pawl 14 toward the takeup teeth 8. The takeup lever 2 is configured such that when the lever 2 is in its initial position the takeup pawl 14 is in close proximity to the takeup teeth 8 or is contacting the teeth 8 with no load.

The release mechanism 22 generally includes a release actuation element 3 and retaining and catch pawls 12, 13 engageable with retaining and catch teeth 6, 7, respectively. In one embodiment, the release actuation element 3 is a release lever rotatable about an axis, preferably, different from the central axis 5. A return spring returns the lever 3 back to its initial position after release of the lever 3. The release mechanism 22 further includes a sliding member 9 that includes the retaining pawl 12 at one end and the catch pawl 13 at another end. The sliding member 9 is attached to the housing 11 by two guide pins 10 that are received in two elongated guides 26 of the sliding member 9.

The retaining, catch and takeup teeth 6, 7, 8 are disposed on a disk element 4 nonrotatably connected to the cable spool 17. Preferably, the takeup teeth 8 are arranged inside of the periphery of the disk element 4 and the retaining and catch teeth 6, 7 are arranged along the periphery, preferably opposite one another. The sliding member 9 is disposed about the disk element 4 such that, during a cable-release operation, the retaining pawl 12 and catch pawl 13 alternately engage the corresponding plurality of teeth 6, 7 on the disk element 4. When the shifter 1 is idle, the retaining pawl 12 is biased to engage the retaining teeth 6 to prevent the disk element 4 and the cable spool 17 from rotating in the cable release direction. In alternative embodiments, the takeup teeth 8 and the retaining teeth 6 may be arranged on the periphery of the disk element 4 and the catch teeth 7 may be arranged inside of the periphery of the disk element 4. Further, the takeup teeth 8 and the catch teeth 7 may be arranged on the periphery of the disk element 4 and the retaining teeth 6 are located inside of the periphery of the disk element 4.

In one embodiment of the present invention, the release mechanism 22 may further include a connecting member 15 disposed between the takeup pawl 14 and the sliding member 9 to displace the takeup pawl 14 away from the takeup teeth 8 during a release operation. Preferably, the connecting member 15 is a resilient member such as a spring. The spring 15 is formed in a U-shape having one end supported on the housing 11 or a supporting plate and the other end connected to the sliding member 9 or the release lever 3. The spring 15 is located such that, at rest, a bend 16 of the spring 15 is located in close proximity to the takeup pawl 14. The spring 15 has a higher spring force than the takeup pawl spring 18 to overcome the initial spring force of takeup pawl spring 18.

Looking to FIG. 1, the takeup and release mechanisms 20, 22 are positioned in initial positions. The catch pawl 13 is disengaged from the catch teeth 7 and the retaining pawl 12 is engaged with the retaining teeth 6 to maintain the disk element 4 and cable spool 17 in a current position, which would otherwise rotate in the cable release direction due to tension in the control cable. The takeup pawl 14 contacts the takeup teeth 8 with no load to transfer the movement of the takeup lever 2 to the disk element 4 immediately upon initiation of the cable pull operation.

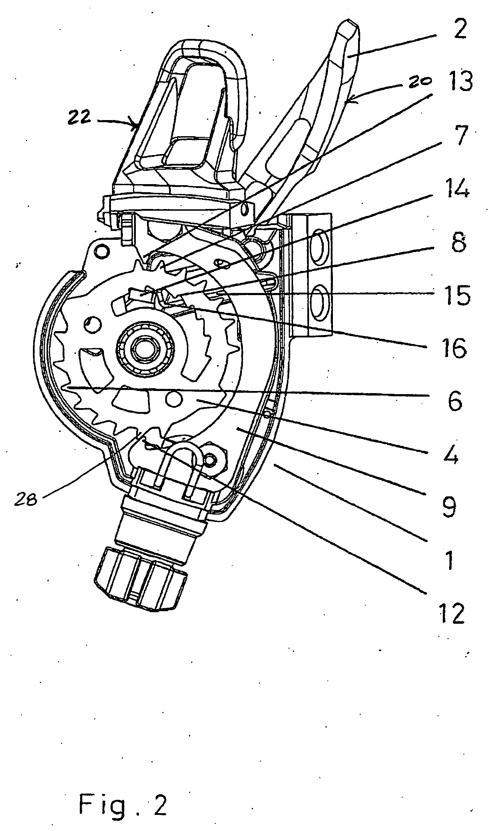

FIG. 2 illustrates the shifter 1 during a takeup operation. Upon actuation of the takeup lever 2, the takeup pawl 14 moves in the cable pull direction causing the disk element 4 to move in the cable pull direction. Also, the retaining pawl 12 of the sliding member 9 slides over the rear of a retaining tooth 28. Further, since the spring 15 is attached to the sliding member 9, it also moves but the spring 15 does not contact the takeup pawl 14 because the takeup pawl 14 has already rotated the disk element 4 farther in the cable pull direction and has assumed a new position. As the cable pull operation continues, the retaining pawl 12 slides over the retaining tooth 28 into the next gap between teeth 6 and preventing any motion of the disk element 4 when the takeup lever 2 and the takeup pawl 14 return to their initial position after the shifting process.

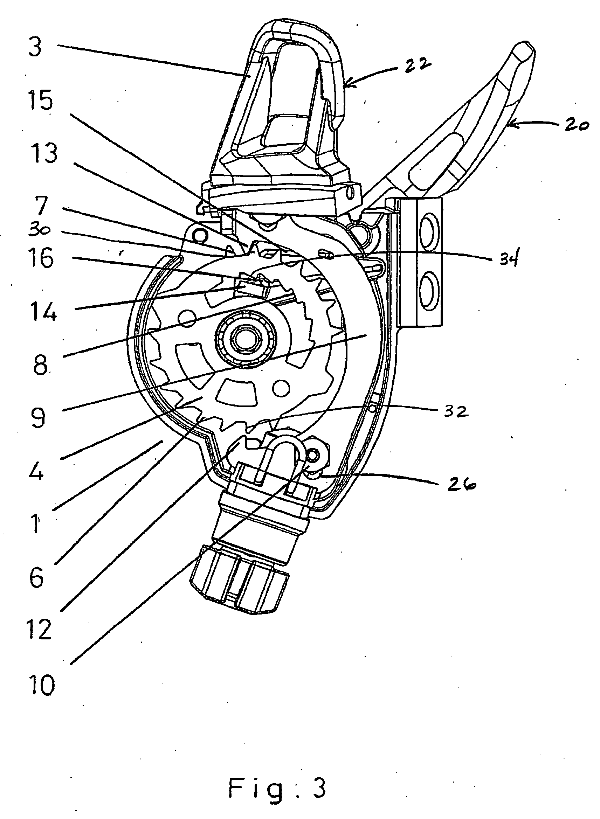

FIG. 3 illustrates the shifter 1 during a cable release operation. Upon actuation of the release lever 3, the guide pins 10 of the sliding element 9 slide along the guides 26 causing the spring 15 to displace the takeup pawl 14 away from the takeup teeth 8. Next, the retaining pawl 12 is displaced away from the retaining teeth 6 causing the disk element 4 and the cable spool 17 to rotate in the cable release direction until the catch pawl 13 engages a next catch tooth 30. This configuration allows one shift to occur during a release operation. Once the release lever 3 is released, the sliding member 9 returns to its initial position causing the catch pawl 13 to disengage from the catch tooth 30 and the retaining pawl 12 to engage a next retaining tooth 32. However, before the retaining pawl 12 engages the retaining tooth 32, the takeup pawl 14 contacts a takeup tooth 34 with no load.

While this invention has been described in reference to a preferred embodiment, it should be understood that numerous changes could be made within the scope of the inventive concepts described. Accordingly, it is intended that the invention is not limited by the disclosed embodiment, but that it has the full scope permitted by the language of the following claims.

### List of Reference Numerals

- 1.: shifter
- 2.: takeup actuation element
- 3.: release actuation element
- 4.: disk element
- 5.: central axis
- 6.: retaining teeth
- 7.: catch teeth
- 8.: takeup teeth
- 9.: sliding member
- 10.: guide pins
- 11.: shifter housing
- 12.: retaining pawl
- 13.: catch pawl
- 14.: takeup pawl
- 15.: connecting member
- 16: bend
- 17.: cable spool
- 18.: takeup pawl spring
- 20: takeup mechanism
- 22.: release mechanism
- 24.: clamp
- 26.: guide
- 28.: retaining tooth
- 30.: catch tooth
- 32.: retaining tooth
- 34.: takeup tooth

## Claims

1. A shifting mechanism for a bicycle shifter for pulling and releasing a control cable connected to a gear change mechanism, the shifting mechanism comprising:
a takeup mechanism (20) for pulling the control cable, the takeup mechanism (20) including a takeup actuation element (2), a takeup pawl (14) and a plurality of takeup teeth (8), the takeup actuating element (2) configured to return to an initial position after a takeup operation,
a release mechanism (22) for releasing the control cable, the release mechanism (22) including a release actuation element (3), a retaining pawl (12) engageable with a plurality of retaining teeth (6) and a catch pawl (13) erigageable with a plurality of catch teeth (7), wherein said release actuation element (3) is a manually operable release lever,
the release mechanism (22) configured to displace the takeup pawl (14) away from the takeup teeth (8) during a release operation, the release actuation element (3) configured to return to an initial position after the release operation,
wherein the takeup actuation element (2) is a takeup lever, the takeup pawl (14) attached to the takeup lever and biased to contact the plurality of takeup teeth (8) by a takeup pawl spring (18), when the takeup actuation element (2) and the release actuation element (3) are in their respective initial positions,
**characterized in that**
the takeup actuation element (2) is configured such that when the takeup actuation element (2) and the release actuation element (3) are in their respective initial positions, the takeup pawl (14) is in close proximity to one of the plurality of takeup teeth (8) such that a takeup operation immediately brings the takeup pawl (14) into contact with said one of the plurality of takeup teeth (8).

2. The shifting mechanism according to claim 1, wherein the release mechanism (22) includes a connecting member (15) for displacing the takeup pawl (14) away from the plurality of takeup teeth (8) during the release operation.

3. The shifting mechanism according to claim 1, wherein the release actuation element (3) includes a connecting member (15), the connecting member (15) being a resilient member having a first end supported on a shifter housing (11) and a second end supported against the release actuation element (3), the resilient member configured to displace the takeup pawl (14) away from the plurality of takeup teeth (8) during the release operation.

4. The shifting mechanism according to claim 2, wherein the connecting member (15) is configured to displace the takeup pawl (14) away from the takeup teeth (8) before the retaining pawl (12) disengages from the retaining teeth (6) to allow the control cable to be released.

5. The shifting mechanism according to claim 4, wherein the retaining pawl (12) is configured to engage the retaining teeth (6) before the takeup pawl (14) returns to an initial position by a takeup pawl spring (18).

6. The shifting mechanism according to claim 3, wherein the release mechanism (22) includes a sliding member (9), the resilient member is configured to return the sliding member (9) to an initial position.

## Patentansprüche

1. Schaltmechanismus für eine Fahrradschaltung zum Ziehen und Lösen eines mit einem Gangschaltmechanismus verbundenen Steuerkabels, wobei der Schaltmechanismus umfasst:
einen Aufziehmechanismus (20) zum Ziehen des Steuerkabels, wobei der Aufziehmechanismus (20) ein Aufziehbetätigungselement (2), eine Aufziehklinke (14) und eine Mehrzahl von Aufziehzähnen (8) enthält,
wobei das Aufziehbetätigungslement (2) konfiguriert ist, um nach einem Aufziehbetrieb zu einer Anfangsposition zurück zu kehren,
einen Freigabemechanismus (22) zum Freigeben des Steuerkabels,
wobei der Freigabemechanismus (22) ein Freigabebetätigungselement (3), eine mit einer Mehrzahl von Haltezähnen (6) in Eingriff bringbare Halteklinke (12) sowie eine mit einer Mehrzahl von Sperrzähnen (7) in Eingriff bringbare Sperrklinke (13) enthält, wobei das Freigabebetätigungselement (3) ein manuell betätigbarer Freigabehebel ist,
wobei der Freigabemechanismus (22) konfiguriert ist, um während eines Freigabevorgangs die Aufziehklinke (14) von den Aufziehzähnen (8) weg zu verlagern, wobei das Freigabebetätigungselement (3) konfiguriert ist, um nach dem Freigabevorgang zu einer Anfangsposition zurück zu kehren,
worin das Aufziehbetätigungselement (2) ein Aufziehhebel ist, die Aufziehklinke (14) an dem Aufziehhebel angebracht und durch eine Aufziehklinkenfeder (18) vorgespannt ist, um die Mehrzahl von Aufziehzähnen (8) zu kontaktieren, wenn das Aufziehbetätigungselement (2) und das Freigabebetätigungselement (3) in ihren jeweiligen Anfangspositionen sind,
**dadurch gekennzeichnet, dass**
das Aufziehbetätigungselement (2) so konfiguriert ist, dass, wenn das Aufziehbetätigungselement (2) und das Freigabebetätigungselement (3) in ihren jeweiligen Anfangspositionen sind, die Aufziehklinke (14) in enger Nachbarschaft zu einem der Mehrzahl von Aufziehzähnen (8) ist, so dass ein Aufziehvorgang die Aufziehklinke (14) sofort mit dem einen der Mehrzahl von Aufziehzähnen (8) in Kontakt bringt.

2. Der Schaltmechanismus nach Anspruch 1, worin der Freigabemechanismus (22) ein Verbindungselement (15) enthält, um während des Freigabevorgangs die Aufziehklinke (14) von der Mehrzahl von Aufziehzähnen (8) weg zu verlagern.

3. Der Schaltmechanismus nach Anspruch 1, worin das Freigabebetätigungselement (3) ein Verbindungselement (15) enthält, wobei das Verbindungselement (15) ein elastisches Element ist, das ein an einem Schaltergehäuse (11) abgestütztes erstes Ende und ein gegen das Freigabebetätigungselement (3) abgestütztes zweites Ende aufweist, wobei das elastische Element konfiguriert ist, um während des Freigabevorgangs die Aufziehklinke (14) von der Mehrzahl von Aufziehzähnen (8) weg zu verlagern.

4. Der Schaltmechanismus nach Anspruch 2, worin das Verbindungselement (15) konfiguriert ist, um die Aufziehklinke (14) von den Aufnahmezähnen (8) weg zu verlagern, bevor sich die Halteklinke (12) von den Haltezähnen (6) löst, um zu erlauben, dass das Steuerkabel freigegeben wird.

5. Der Schaltmechanismus nach Anspruch 4, worin die Halteklinke (12) konfiguriert ist, um mit den Haltezähnen (6) in Eingriff zu treten, bevor die Aufziehklinke (14) durch eine Aufziehklinkenfeder (18) zu einer Anfangsposition zurückkehrt.

6. Der Schaltmechanismus nach Anspruch 3, worin der Freigabemechanismus (22) ein Schiebeelement (9) enthält, wobei das elastische Element konfiguriert ist, um das Schiebeelement (9) zu einer Anfangsposition zurück zu bringen.

## Revendications

1. Mécanisme de changement de vitesses dévolu à un sélecteur équipant une bicyclette, en vue de tirer et de relâcher un câble de commande relié à un mécanisme variateur d'engrenages, ledit mécanisme de changement de vitesses comprenant :
un mécanisme d'enroulement (20) destiné à tirer le câble de commande, ledit mécanisme d'enroulement (20) incluant un élément (2) actionneur d'enroulement, un cliquet d'enroulement (14) et une pluralité de dents d'enroulement (8), ledit élément (2) actionneur d'enroulement étant agencé en vue de retourner à une position initiale à l'issue d'un processus d'enroulement,
un mécanisme de détente (22) conçu pour relâcher le câble de commande, ledit mécanisme de détente (22) incluant un élément (3) actionneur de détente, un cliquet de retenue (12) pouvant venir coopérer avec une pluralité de dents de retenue (6), et un cliquet d'arrêt (13) pouvant venir coopérer avec une pluralité de dents d'arrêt (7), ledit élément (3) actionneur de détente étant une manette de détente à fonctionnement manuel,
ledit mécanisme de détente (22) étant agencé en vue de dissocier le cliquet d'enroulement (14) d'avec les dents d'enroulement (8) au cours d'un processus de relâchement, ledit élément (3) actionneur de détente étant agencé en vue de retourner à une position initiale à l'issue dudit processus de relâchement,
sachant que l'élément (2) actionneur d'enroulement est une manette d'enroulement, le cliquet d'enroulement (14) étant relié à ladite manette d'enroulement et étant sollicité pour être mis en contact avec la pluralité de dents d'enroulement (8), sous l'action d'un ressort (18) associé audit cliquet d'enroulement, lorsque ledit élément (2) actionneur d'enroulement et l'élément (3) actionneur de détente occupent leurs positions initiales respectives,
**caractérisé par le fait que**
l'élément (2) actionneur d'enroulement est agencé de façon telle que, lorsque ledit élément (2) actionneur d'enroulement et l'élément (3) actionneur de détente occupent leurs positions initiales respectives, le cliquet d'enroulement (14) soit intimement rapproché de l'une des dents de la pluralité de dents d'enroulement (8), de manière qu'un processus d'enroulement mette ledit cliquet d'enroulement (14) immédiatement en contact avec ladite dent de la pluralité de dents d'enroulement (8).

2. Mécanisme de changement de vitesses selon la revendication 1, dans lequel le mécanisme de détente (22) inclut une pièce de liaison (15) conçue pour dissocier le cliquet d'enroulement (14) d'avec la pluralité de dents d'enroulement (8) au cours du processus de relâchement.

3. Mécanisme de changement de vitesses selon la revendication 1, dans lequel l'élément (3) actionneur de détente comporte une pièce de liaison (15), ladite pièce de liaison (15) étant une pièce à rebond élastique qui comprend une première extrémité en appui sur un boîtier (11) du sélecteur, et une seconde extrémité prenant appui contre ledit élément (3) actionneur de détente, ladite pièce à rebond élastique étant agencée en vue de dissocier le cliquet d'enroulement (14) d'avec la pluralité de dents d'enroulement (8) au cours du processus de relâchement.

4. Mécanisme de changement de vitesses selon la revendication 2, dans lequel la pièce de liaison (15) est agencée en vue de dissocier le cliquet d'enroulement (14) d'avec les dents d'enroulement (8) avant que le cliquet de retenue (12) ne se dissocie d'avec les dents de retenue (6), afin d'autoriser un relâchement du câble de commande.

5. Mécanisme de changement de vitesses selon la revendication 4, dans lequel le cliquet de retenue (12) est agencé de manière à venir coopérer avec les dents de retenue (6) avant que le cliquet d'enroulement (14) ne retourne à une position initiale, sous l'action d'un ressort (18) associé audit cliquet d'enroulement.

6. Mécanisme de changement de vitesses selon la revendication 3, dans lequel le mécanisme de détente (22) inclut une pièce coulissante (9), la pièce à rebond élastique étant conçue pour ramener ladite pièce coulissante (9) à une position initiale.
